# EUROPEAN PATENT APPLICATION

(11) **EP 2 254 373 A1**
(43) Date of publication of application: **24.11.2010**
(21) Application number: 10176237.5
(22) Date of filing: 25.07.2008
(51) Int. Cl.: H04W 48/16

(54) **Channel monitoring methods in wireless broadcast systems**

(30) Priority: 25.07.2007 US 828336
(62) Divisional of application: 08826520.2
(71) Applicant: Qualcomm Incorporated, San Diego, CA 92121-1714 (US)
(72) Inventor: Li, Linbo, San Diego, CA 92121-1714 (US); Mantravaldi, Ashok, San Diego, CA 92121-1714 (US); Ling, Fuyun, San Diego, CA 92121-1714 (US); Krishnamoorthi, Raghuraman, San Diego, CA 92121-1714 (US)
(74) Representative: Condon, Neil

(57) **Abstract**

A wireless communication method is disclosed, comprising measuring a received signal strength indicator (RSSI) for a current radio frequency (RF); determining whether the measured RSSI is above a predetermined threshold value; monitoring neighboring RFs; and detecting the presence of the FLO (forward link only) signal in the neighboring RFs without detecting a time-division multiplexed pliot (TDM1). Also disclosed is a method of monitoring radio frequencies (RFs) at an access terminal in a wireless communication environment to detect a FLO (Forward link only) signal without detecting a time-division multiplexed pliot (TDM1), the method comprising detecting an energy level for a wide-area identity (WID) channel associated with a received signal; comparing the energy level for the WID channel with a predetermined threshold; and detecting a presence of the FLO signal based upon the comparison.

## Description

### BACKGROUND

### I. Field

The following description relates generally to wireless communications, and more particularly to monitoring and switching radio frequency channels in a wireless communication environment.

### II. Background

Wireless communication systems have become a prevalent means by which a majority of people worldwide has come to communicate. Wireless communication devices have become smaller and more powerful in order to meet consumer needs and to improve portability and convenience. The increase in processing power in mobile devices such as cellular telephones has lead to an increase in demands on wireless network transmission systems. Such systems typically are not as easily updated as the cellular devices that communicate there over. As mobile device capabilities expand, it can be difficult to maintain an older wireless network system in a manner that facilitates fully exploiting new and improved wireless device capabilities.

A typical wireless communication network (*e.g.*, employing frequency, time, and code division techniques) includes one or more base stations that provide a coverage area and one or more mobile (*e.g.*, wireless) terminals that can transmit and receive data within the coverage area. A typical base station can simultaneously transmit multiple data streams for broadcast, multicast, and/or unicast services, wherein a data stream is a stream of data that can be of independent reception interest to a mobile terminal. A mobile terminal within the coverage area of that base station can be interested in receiving one, more than one or all the data streams carried by the composite stream. Likewise, a mobile terminal can transmit data to the base station or another mobile terminal. Such communication between base station and mobile terminal or between mobile terminals can be degraded due to channel variations and/or interference power variations.

Presently, a forward-link-only (FLO) signal can be transmitted to a user device over a radio frequency (RF) channel that occupies, for instance, a 6 MHz bandwidth portion in the lower 700 MHz frequency band. FLO signals can be present in more than one RF channel, for example, to accommodate multiple streams of contents. However, conventional wireless systems do not provide for monitoring and/or switching between a plurality of RF channels containing FLO signals, and the like. Thus, there exists a need in the art for a system and/or methodology of improving throughput in such wireless network systems.

### SUMMARY

The following presents a simplified summary of one or more embodiments in order to provide a basic understanding of such embodiments. This summary is not an extensive overview of all contemplated embodiments, and is intended to neither identify key or critical elements of all embodiments nor delineate the scope of any or all embodiments. Its sole purpose is to present some concepts of one or more embodiments in a simplified form as a prelude to the more detailed description that is presented later.

In accordance with one or more embodiments and corresponding disclosure thereof, various aspects are described in connection with monitoring RF channels in a wireless communication environment to determine whether one or more channels comprise(s) a forward-link-only (FLO) signal. A receiver can receive a first RF channel with a FLO signal and can monitor one or more other RF channels for FLO signals. Upon a determination that a monitored RF channel comprises a FLO signal, the receiver can switch between the first RF channel and the monitored RF channel to facilitate providing seamless reception of the FLO signal, which may be superframe synchronized between RF channels. FLO signal detection can be performed using one or more of a wide-area identification channel energy detection protocol and a wide-area overhead information symbol (OIS) decoding error detection protocol. Additionally, FLO signal detection can also be based upon other signal quality metrics such as the received signal strength indication (RSSI) and/or cyclic prefix (CP) correlation or a time-division multiplexed pilot (TDM pilot) detection protocol.

According to related aspects, a method of monitoring radio frequencies (RFs) at an access terminal in a wireless communication environment to detect a FLO (Forward link only) signal is described herein. The method can include detecting a first time-division-multiplexed pilot (TDM1) on a received signal. Further, the method can comprise incrementing a TDM detection timer. Moreover, the method can include determining if the TDM pilot has been detected and the TDM1 detection timer has exceeded a TDM detection timeout. Additionally, the method can comprise detecting a presence of the FLO signal based upon the determination. The determination can include further criteria based on wide-area area identification channel energy and wide-area OIS decoding error.

Another aspect relates to a wireless communications apparatus. The wireless communications apparatus can include a receiver that monitors at least one neighboring RF and analyzes an RSSI there for. Further, the wireless communications apparatus can include a memory that stores information related to RSSI and identity information for a current RF and the at least one neighboring RF. Moreover, the wireless communications apparatus can include a processor, coupled to the memory, that switches between the current RF channel and the at least one neighboring RF channel.

Yet another aspect relates to a wireless communications apparatus. The wireless communications apparatus can include means for measuring a received signal strength indicator (RSSI) for a current radio frequency (RF); means for determining whether the measured RSSI is above a predetermined threshold value; means for monitoring neighboring RFs; and means for detecting the presence of the FLO (forward link only) signal in the neighboring RFs. The detection of the presence of the FLO signal in the neighboring RFs can be based on RSSI and CP correlation.

Still another aspect relates to a computer-readable medium having a computer program comprising computer-executable instructions for measuring a received signal strength indicator (RSSI) for a current radio frequency (RF), determining whether the measured RSSI is above a predetermined threshold value, monitoring neighboring RFs, and detecting the presence of the FLO (forward link only) signal in the neighboring RFs.

In accordance with another aspect, a processor can execute instructions for increasing throughput in a wireless communication environment, wherein the instructions can include measuring a received signal strength indicator (RSSI) for a current radio frequency (RF) and determining whether the measured RSSI is above a predetermined threshold value. Further, the instructions can include monitoring neighboring RFs and detecting the presence of the FLO (forward link only) signal in the neighboring RFs.

According to another aspect, a method of monitoring radio frequencies (RFs) at an access terminal in a wireless communication environment to detect a FLO (Forward link only) signal is described herein. The method can include detecting an energy level for a wide-area identity (WID) channel associated with a received signal. Further, the method can include comparing the energy level for the WID channel with a predetermined threshold. Moreover, the method can include detecting a presence of the FLO signal based upon the comparison.

To the accomplishment of the foregoing and related ends, the one or more embodiments comprise the features hereinafter fully described and particularly pointed out in the claims. The following description and the annexed drawings set forth in detail certain illustrative aspects of the one or more embodiments. These aspects are indicative, however, of but a few of the various ways in which the principles of various embodiments may be employed and the described embodiments are intended to include all such aspects and their equivalents.

### BRIEF DESCRIPTION OF THE DRAWINGS

FIG. 1 illustrates a wireless network communication system in accordance with various embodiments presented herein.

FIG. 2 is an illustration of a multiple access wireless communication system according to one or more embodiments.

FIG. 3 is an illustration of a methodology for detecting a FLO signal, in accordance with various aspects.

FIG. 4 is an illustration of a timeline of loss of lock based and application layer initiated monitoring methods with the proposed FLO searching schemes, according to one or more aspects.

FIG. 5 illustrates a high-level state transition diagram for FLO cannel monitoring, in accordance with one or more aspects.

FIG. 6 illustrates a timeline for performing background monitoring with a WID energy-based FLO signal detection method, according to one or more aspects.

FIG. 7 illustrates a timeline for performing background monitoring with a WOIS-PER-based FLO signal detection method, according to one or more aspects.

FIG. 8 is an illustration of a timeline for performing background monitoring with a WID-energy based FLO signal detection method, according to one or more aspects.

FIG. 9 is an illustration of a timeline for performing background monitoring with a combined WID-energy-and- WOIS-PER-based FLO signal detection method, according to one or more aspects.

FIG. 10 is an illustration of a user device that facilitates FLO channel monitoring and/or switching over a FLO channel in a wireless communication environment, in accordance with one or more aspects set forth herein.

FIG. 11 is an illustration of a system that facilitates providing multiple RF channels in a wireless communication environment in accordance with various aspects.

FIG. 12 is an illustration of a CP correlation arrangement, in accordance with one or more aspects.

FIG. 13 is an illustration of a timeline for an RSSI (received signal strength indication) monitoring method for power up, in accordance with one or more aspects.

FIG. 14 illustrates a timeline for performing an asynchronous RSSI protocol during an idle mode/application-layer-initiated period, in accordance with various aspects.

FIG. 15 illustrates an RSSI monitoring timeline that is based on an end-of-MLC interrupt upon the termination of a MediaFLO logical channel, in accordance with one or more aspects.

FIG. 16 is an illustration of a RF monitoring timeline for an RSSI-with-CP (cyclic prefix) correlation protocol, in accordance with one or more aspects.

FIG. 17 is an illustration of a wireless network environment that can be employed in conjunction with the various systems and methods described herein.

FIG. 18 illustrates an apparatus that facilitates performing FLO signal detection in accordance with various aspects presented herein.

### DETAILED DESCRIPTION

Various embodiments are now described with reference to the drawings, wherein like reference numerals are used to refer to like elements throughout. In the following description, for purposes of explanation, numerous specific details are set forth in order to provide a thorough understanding of one or more embodiments. It may be evident, however, that such embodiment(s) may be practiced without these specific details. In other instances, well-known structures and devices are shown in block diagram form in order to facilitate describing one or more embodiments.

As used in this application, the terms "component," "system," and the like are intended to refer to a computer-related entity, either hardware, software, software in execution, firmware, middle ware, microcode, and/or any combination thereof. For example, a component may be, but is not limited to being, a process running on a processor, a processor, an object, an executable, a thread of execution, a program, and/or a computer. One or more components may reside within a process and/or thread of execution and a component may be localized on one computer and/or distributed between two or more computers. Also, these components can execute from various computer readable media having various data structures stored thereon. The components may communicate by way of local and/or remote processes such as in accordance with a signal having one or more data packets (*e.g.*, data from one component interacting with another component in a local system, distributed system, and/or across a network such as the Internet with other systems by way of the signal). Additionally, components of systems described herein may be rearranged and/or complimented by additional components in order to facilitate achieving the various aspects, goals, advantages, etc., described with regard thereto, and are not limited to the precise configurations set forth in a given figure, as will be appreciated by one skilled in the art.

Furthermore, various embodiments are described herein in connection with a subscriber station. A subscriber station can also be called a system, a subscriber unit, mobile station, mobile, remote station, access point, remote terminal, access terminal, user terminal, user agent, a user device, or user equipment. A subscriber station may be a cellular telephone, a cordless telephone, a Session Initiation Protocol (SIP) phone, a wireless local loop (WLL) station, a personal digital assistant (PDA), a handheld device having wireless connection capability, or other processing device connected to a wireless modem.

Moreover, various aspects or features described herein may be implemented as a method, apparatus, or article of manufacture using standard programming and/or engineering techniques. The term "article of manufacture" as used herein is intended to encompass a computer program accessible from any computer-readable device, carrier, or media. For example, computer-readable media can include but are not limited to magnetic storage devices (*e.g.*, hard disk, floppy disk, magnetic strips...), optical disks (*e.g.*, compact disk (CD), digital versatile disk (DVD)...), smart cards, and flash memory devices (*e.g.*, card, stick, key drive...). Additionally, various storage media described herein can represent one or more devices and/or other machine-readable media for storing information. The term machine-readable medium" can include, without being limited to, wireless channels and various other media capable of storing, containing, and/or carrying instruction(s) and/or data. Furthermore, the term "channel" as used herein can be a combination of an RF channel, wide-area identity (WID) channel and local-area identification (LID) channel, namely ( RF, WID,LID).

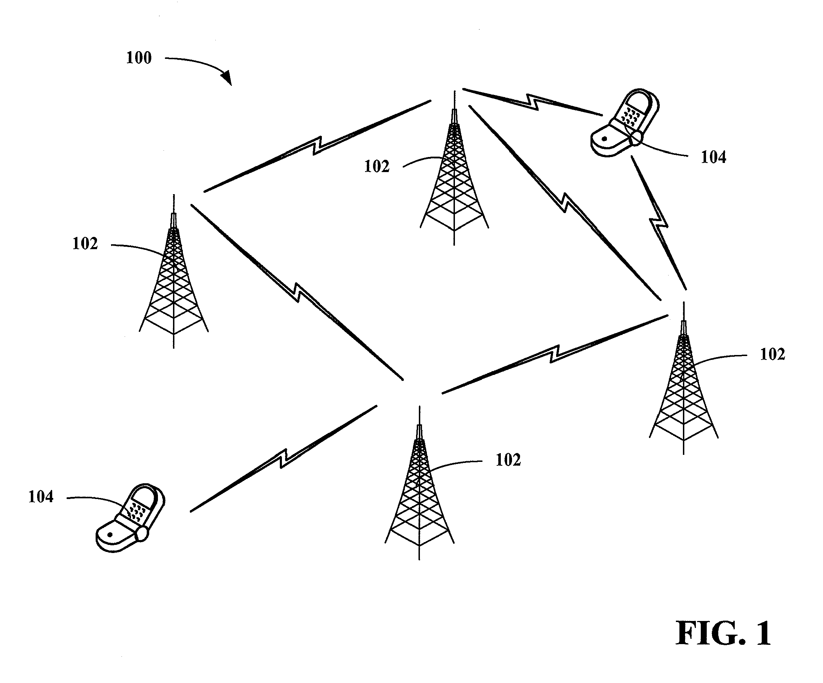

Referring now to **Fig. 1**, a wireless network communication system 100 is illustrated in accordance with various embodiments presented herein. System 100 can comprise one or more base stations 102 in one or more sectors that receive, transmit, repeat, etc., wireless communication signals to each other and/or to one or more mobile devices 104. Each base station 102 can comprise a transmitter chain and a receiver chain, each of which can in turn comprise a plurality of components associated with signal transmission and reception (*e.g.*, processors, modulators, multiplexers, demodulators, demultiplexers, antennas, etc.), as will be appreciated by one skilled in the art. Mobile devices 104 can be, for example, cellular phones, smart phones, laptops, handheld communication devices, handheld computing devices, satellite radios, global positioning systems, PDAs, and/or any other suitable device for communicating over wireless network 100. System 100 can be employed in conjunction with various aspects described herein in order to facilitate monitoring and/or switching between forward-link-only (FLO) channels in a wireless communication environment, as set forth with regard to subsequent figures.

For example, base stations 102 can transmit FLO signals over a plurality of different RF channels, where each base station 102 can employ one or more RF channels. Additionally and/or alternatively, a same RF channel may be utilized by more than one base station 102. User device(s) 104 can then employ one or more algorithms and/or methods (*e.g.*, by way of a processor, computer-executable instructions, a computer-readable memory, ...) to monitor a plurality of the RF channels being utilized to broadcast FLO signals, and can switch between RF channels in order to improve communication throughput between one or more base stations 102 and the user device 104.

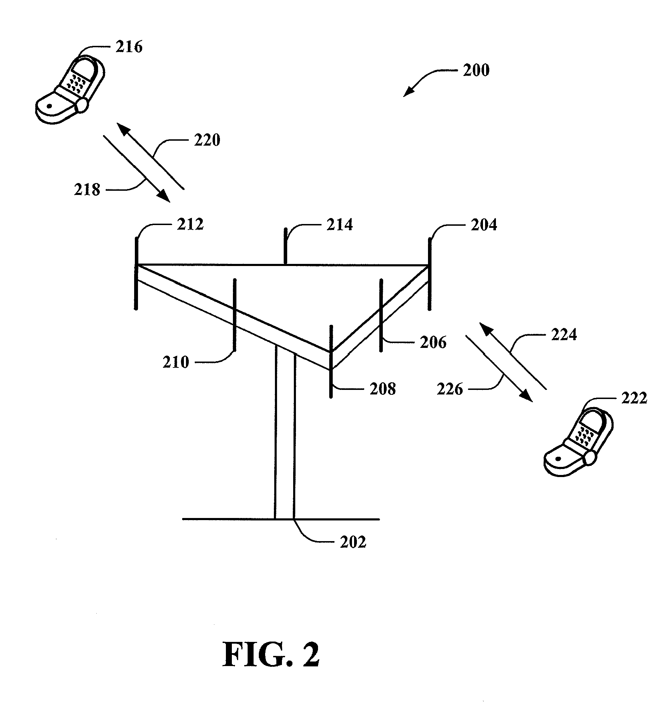

Referring now to **Fig. 2****,** a multiple access wireless communication system 200 according to one or more embodiments is illustrated. System 200 is presented for illustrative purposes and can be utilized in conjunction with various aspects set forth below. A 3-sector base station 202 includes multiple antenna groups: one including antennas 204 and 206, another including antennas 208 and 210, and a third including antennas 212 and 214. According to the figure, only two antennas are shown for each antenna group, however, more or fewer antennas may be utilized for each antenna group. Mobile device 216 is in communication with antennas 212 and 214, where antennas 212 and 214 transmit information to mobile device 216 over forward link 220 and receive information from mobile device 216 over reverse link 218. Mobile device 222 is in communication with antennas 204 and 206, where antennas 204 and 206 transmit information to mobile device 222 over forward link 226 and receive information from mobile device 222 over reverse link 224.

Each group of antennas and/or the area in which they are designated to communicate is often referred to as a sector of base station 202. In one embodiment, antenna groups each are designed to communicate to mobile devices in a sector of the areas covered by base station 202. In communication over forward links 220 and 226, the transmitting antennas of base station 202 can utilize beam-forming techniques in order to improve the signal-to-noise ratio of forward links for the different mobile devices 216 and 222. Additionally, a base station using beam-forming to transmit to mobile devices scattered randomly through its coverage area causes less interference to mobile devices in neighboring cells/sectors than a base station transmitting through a single antenna to all mobile devices in its coverage area. A base station may be a fixed station used for communicating with the terminals and may also be referred to as an access point, a Node B, or some other terminology. A mobile device may also be called a mobile station, user equipment (UE), a wireless communication device, terminal, access terminal, user device, or some other terminology.

In accordance with one or more aspects, a user device, such as user device 216, can monitor multiple RF channels comprising FLO signals (*e.g.*, transmitted over forward link 220 ...) and can switch between such channels to optimize reception at user device 216. A FLO signal can be targeted to occupy a channel of approximately 6MHz of bandwidth in the lower 700MHz frequency band of a communication system; however, it is contemplated that a FLO signal can leverage other bandwidths such as 5, 7, 8, *etc.* MHz and/or can reside in other RF frequencies in addition to or instead of the lower 700MHz band. When FLO signals are present in more than one radio frequency (RF) channel to accommodate more streams of contents, it can be desirable to investigate the issues of monitoring, acquiring, and switching to different RF channels. The scenarios in which a receiver (*e.g.*, in a user device) may initiate monitoring and switching to new FLO RF channels are several. For example, the receiver can initiate monitoring and/or switching of channels upon a serious failure, such as loss of lock in the context of re-acquisition, which may occur on a current FLO RF channel. According to another example, it may be desirable to initiate and/or monitor a FLO RF channel upon initiation of an application layer. Another example relates to monitoring and/or switching new RF channels during an idle mode of a receiver. Yet another example relates to background monitoring of new RF channels (*e.g.*, periodic, reception quality dependent, ...).

Before initiating monitoring new channels, the receiver can be provided with a list of RF channels among which it can search for a FLO signal. This initial list can be obtained from a FLO network by decoding control channel messages. The network can broadcast RF description messages to FLO receivers through the control channel according to a predetermined schedule (*e.g.*, once every superframe, ...). A plurality of information fields can be defined and/or populated to facilitate providing such information to the FLO receiver. For instance, an "RFChannelCount" field can contain a number of RF channels that have FLO broadcast. Fields related to RFChannelID, Frequency, and ChannelPlan can contain information related to the channel identifier, the center frequency, and the channel bandwidth of the RF channels indicated in RFChannelCount, respectively. The receiver can search for FLO signal on these RF channel candidates and can determine if FLO broadcast is indeed available or decodable on such channels.

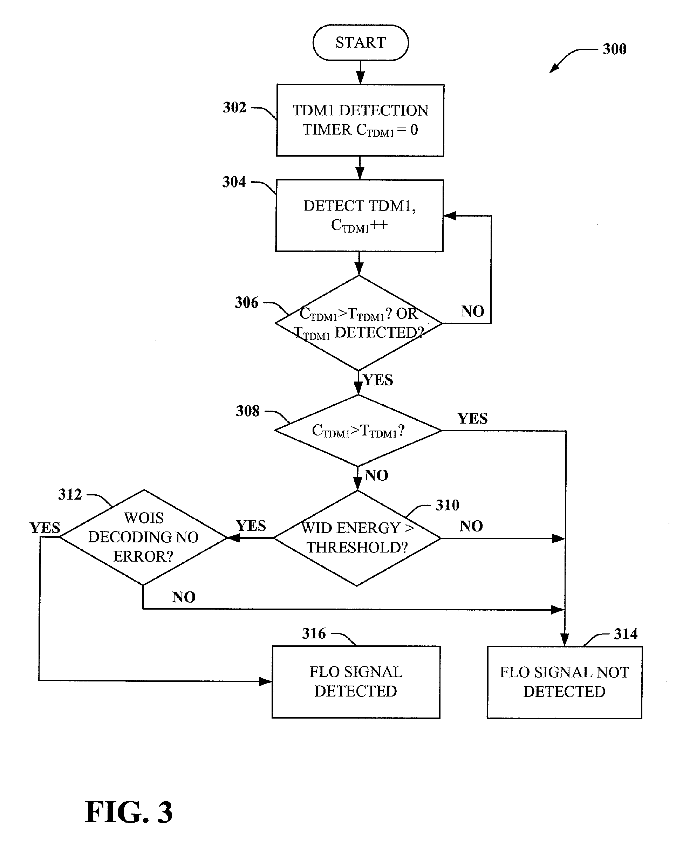

Referring to **Fig. 3****,** a methodology relating to FLO signal detection is illustrated. For example, a methodology can relate to monitoring, detecting, and/or switching between FLO RF channels in an FDMA environment, an OFDMA environment, a CDMA environment, a WCDMA environment, a TDMA environment, an SDMA environment, or any other suitable wireless environment. While, for purposes of simplicity of explanation, the methodology is shown and described as a series of acts (as well as other methodologies illustrated herein), it is to be understood and appreciated that the methodology are not limited by the order of acts, as some acts may, in accordance with one or more embodiments, occur in different orders and/or concurrently with other acts from that shown and described herein. For example, those skilled in the art will understand and appreciate that a methodology could alternatively be represented as a series of interrelated states or events, such as in a state diagram. Moreover, not all illustrated acts may be required to implement a methodology in accordance with one or more embodiments.

In accordance with such method, monitoring of new RF channels can be initiated, for instance, after a serious failure of FLO operation on a current RF channel, such as a loss of lock in the context of re-acquisition. For example, a receiver can attempt to re-acquire reception on an original RF channel (*e.g.*, the lost channel). If signal lock is not obtained within a re-acquisition timeout for the original channel, the receiver can begin monitoring new RF channels on a candidate list obtained from control channel messages. Since lock of the original channel is already lost, it is not necessary to store and recover the key parameters of blocks such as direct current (DC), automatic gain control (AGC), automatic frequency control (AFC), and timing of the original FLO channel. The receiver can switch to a new RF channel and restart detection of a FLO signal.

**Fig. 3** is an illustration of a methodology 300 for detecting a FLO signal, in accordance with various aspects. Upon initiation of FLO signal detection, a TDM1 detection timer C_{TDM1} can be initiated to 0 at 302. Then FLO device attempts to detect TDM pilot 1 on the received signal at 304. Also at 304, the TDM1 detection timer C_{TDM1} is incremented. At 306, a determination can be made regarding if FLO device has successfully detected TDM1 and if the TDM1 detection timer C_{TDM1} has exceeded the TDM1 detection timeout TDM1. If either event occurs, the method goes back to 304. At 304 the method reattempts to detect TDM1 and the TDM1 detection counter C_{TDM1} is incremented. If it is determined in 306 that C_{TDM1} has exceeded the timeout value T_{TDM1}, TDM1 detection has failed and FLO signal is not detected. In this case, the method proceeds to 314, where an indication that a FLO signal is not detected can be generated. If it is determined in 306 that TDM1 has been successfully detected, then at 310, an energy level for a wide-area identity (WID) channel associated with the transmission being analyzed can be ascertained and compared to a predetermined threshold energy level. If the detected WID energy is not greater than the predetermined threshold level, then a conclusion may be drawn that the FLO signal is not detected, at 314. If the detected WID energy is greater than the threshold value, then at 312, a determination can be made regarding whether an error has occurred during decoding of a WOIS (wide-area overhead information symbol) in the transmission being analyzed (*e.g.*, upon detection of a WID associated with the transmission). If an error has occurred, then it may be concluded that the FLO signal is not detected, at 314. If no error has occurred during decoding of the WOIS, then at 316, a conclusion may be drawn that the FLO signal is detected. Each of the three criteria, namely TDM1 detection (blocks 302 to 308), WID energy (block 310), WOIS packet error rate (block 312), may or may not be used in the method 300. As seen from method 300, FLO signal can be detected employing one or more of the above criteria. It will be understood that method 300 is iterative and can be repeatedly and/or continuously performed by, for example, a user device communicating in a wireless communication environment to facilitate FLO signal detection.

Thus, according to the methodology 300, determining whether FLO service is available on another RF channel can be performed. The approach first attempts to detect TDM Pilot 1 (TDM1). After TDM Pilot 1 detection, if the WID detection returns energy weaker than the threshold, FLO signal can be declared unavailable on the new channel. If instead the detected WID energy is higher than the threshold, the receiver continues to decode WOIS and uses the Turbo decoding PER as the detection criterion.

To save receiver power consumption, a received signal strength indicator (RSSI) on the new channel can be used as an early-exit condition. For example, after switching to the new channel and the acquisition of direct current (DC) and automatic gain control (AGC), the receiver first calculates the RSSI of the new channel based on a digital variable gain amplifier (DVGA) loop accumulator and AGC gain state information. If the RSSI is higher than a predefined threshold, the receiver may proceed to execute a searching procedure employing one or more criteria as shown in method 300. If not, FLO may be declared unavailable on the new channel.

It will be appreciated that, in accordance with one or more aspects described herein, inferences can be made regarding channel monitoring, FLO signal detection, RF channel switching, etc. As used herein, the term to "infer" or "inference" refers generally to the process of reasoning about or inferring states of the system, environment, and/or user from a set of observations as captured *via* events and/or data. Inference can be employed to identify a specific context or action, or can generate a probability distribution over states, for example. The inference can be probabilistic-that is, the computation of a probability distribution over states of interest based on a consideration of data and events. Inference can also refer to techniques employed for composing higher-level events from a set of events and/or data. Such inference results in the construction of new events or actions from a set of observed events and/or stored event data, whether or not the events are correlated in close temporal proximity, and whether the events and data come from one or several event and data sources.

According to an example, one or methods presented above can include making inferences regarding whether to switch between RF channel frequencies based on extrinsic information, such as signal strength or the like. For instance, a power level associated with a current RF channel can be continuously and/or periodically monitored. A determination can be made (*e.g.*, by a receiver, a processor, ...) that the power level is increasing as a user device moves through a sector or region of a wireless communication system (*e.g*., the user device is moving toward the source of the RF transmission), in which case an inference may be made that no channel switch is presently necessary. According to a related example, evaluation of the RF channel power level may indicate that channel power is decreasing as the user device moves through the coverage area (*e.g.*, the user device is moving away from the source of the RF transmission), in which case an inference may be made that switching to a new RF channel will be imminently desirable, and actions related thereto may be initiated. Such inferences can be based on, for instance, a comparison of a detected power level to a predetermined threshold power level to assess whether channel switching is desirable. Additionally and/or alternatively, each successive power level evaluation can be compared to one or more preceding power level readings to provide power level trend information as the user device moves throughout one or more coverage areas. It will be appreciated that the foregoing example is illustrative in nature and is not intended to limit the number of inferences that can be made or the manner in which such inferences are made in conjunction with the various embodiments and/or methods described herein.

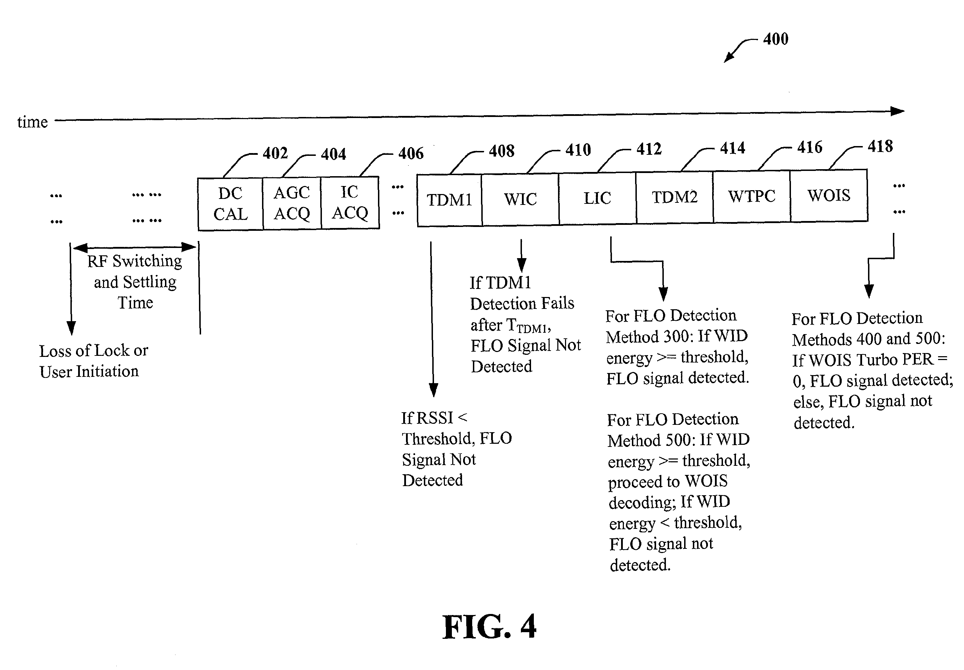

**Fig. 4** is an illustration of a timeline 400 of loss of lock based and application layer initiated monitoring methods with the proposed FLO searching schemes, according to one or more aspects. According to the figure, DC acquisition 402 may occur after a period of RF switching and settling time, which in turn may be triggered by a loss of lock or by user initiation. An AGC acquisition block 404 follows DC acquisition 402, after which a determination can be made regarding whether RSSI energy is below the predetermined threshold value. If the determination is positive, then it may be concluded that the FLO signal is not detected. An IC (interference canceller) acquisition block 406 follows the AGC acquisition block. IC acquisition may be performed, upon the completion of which an IC_Done interrupt may be provided.

A TDM1 block 408 is illustrated, which represents a period T_{TDM1} for TDM Pilot 1 detection, after which, during a WID channel (WIC) 410 transmission, FLO signal detection can be evaluated. If detection has failed as of the termination of T_{TDM1}, then an indication of such can be made. A local area ID channel (LIC) block 412 follows WIC block 410, during which various actions and/or assessments can be performed depending on the particular FLO signal detection scheme. For example, in conjunction with method 300, wherein only a WID energy criteria is employed, a determination can be made regarding whether detected WID energy is greater than or equal to a predetermined threshold level, in which case a conclusion can be drawn that the FLO signal has been successfully detected. According to a related example, in conjunction with method 300, if WID energy is determined to be greater than or equal to the predetermined threshold value, then WOIS decoding and analysis can be performed. Alternatively, if WID energy is determined to be below the threshold value, a determination can be made that the FLO signal has not been detected.

A TDM2 block is depicted at 414, which defines a period for detection of a TDM Pilot 2, after which a wide area transition pilot channel 416 can be evaluated to facilitate performing channel estimation for WOIS decoding at 418. For method 300, wherein a WOIS packet error rate criteria is employed, a determination can be made regarding whether a WOIS Turbo packet error rate (PER) is equal to zero; if so, the FLO signal has been successfully detected. If not, then a conclusion may be made that the FLO signal has not been successfully detected.

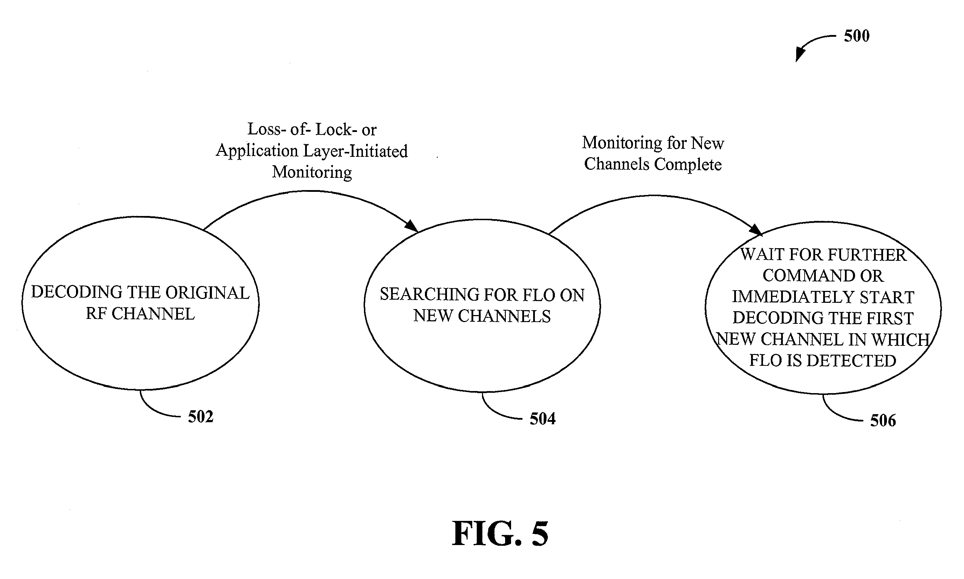

**Fig. 5** illustrates a high-level state transition diagram 500 for FLO channel monitoring, in accordance with one or more aspects. At 502, an original RF channel may be decoded. Upon an occurrence of a loss of lock, or upon application layer-initiated monitoring, FLO signal searching can be initiated on new RF channels, at 504. Upon completion of new channel monitoring, at 506, further instruction can be awaited. According to another aspect, at 506, decoding of a first channel over which a FLO signal is detected can begin.

In conjunction with the preceding figures, for the loss of lock based monitoring, all approaches of FLO signal searching can be applied. Following a period during which the RF circuit switches to the new channel, two OFDM symbols may be used for the acquisition of the DC and AGC blocks for the new channel. If it is determined by the searching scheme that FLO service is available, demodulation of the new FLO signal may be initiated. The RF switching and settling time may be, for example, approximately 5 ms, which is insignificant compared to the superframe duration of 1 second. If a FLO signal is available on the new channel, the wait time until a next occurrence of a TDM Pilot 1 can be up to 1 second, and therefore the TDM Pilot 1 detection timeout *T*_{*TDM*1} can be predefined to be approximately 1 second.

The monitoring of new channels can also be initiated by the application layer. For instance, software can issue a command to monitor new RF channels, and decoding and/or video playing of the original channel may be terminated as a result. As in loss of lock-based monitoring, the key parameters for the original FLO channel need not be restored, and any of the FLO signal searching methods illustrated in method 300 may be employed. Considerations made for the loss of lock based monitoring are also applicable in this scenario.

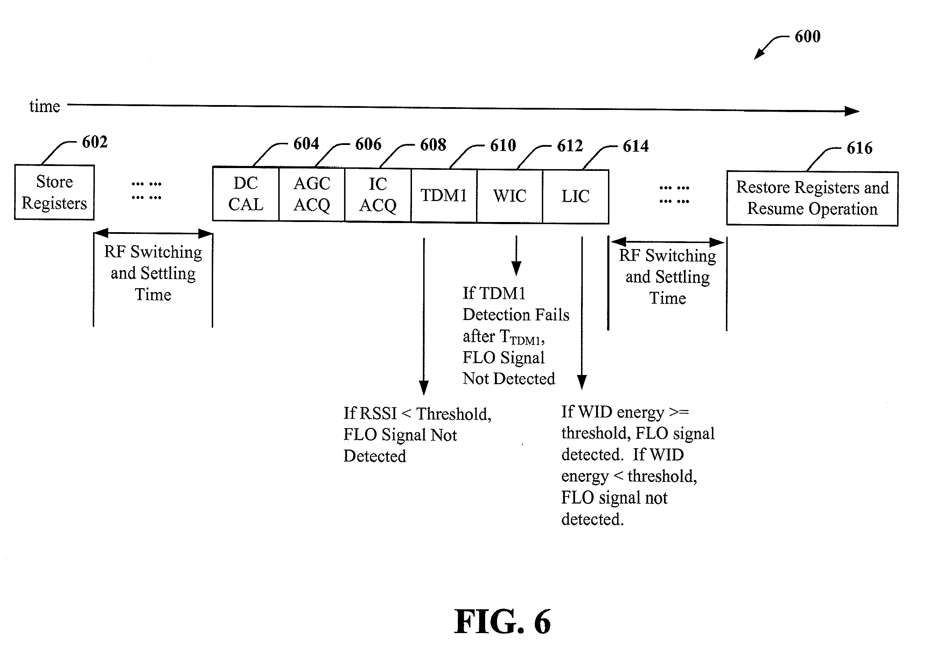

**Figs. 6-9** relate to background monitoring of RF channels in conjunction with one or more FLO signal detection methods presented herein. For instance, a receiver can monitor, in the background, the new channels on the list retrieved from a control channel without disturbing the decoding of the current RF channel. According to an example, it may be assumed that FLO signals on different RF channels are superframe synchronized. In such a case, the receiver can have knowledge of the next expected TDM Pilot 1 instant on the new RF channel so that it can switch the RF circuit to the new frequency at an appropriate time. Because the decoding on the original channel should not be adversely impacted, the TDM Pilot 1 detection timeout *T*_{*TDM*1} size can be maintained within a predefined size range to mitigate affecting MediaFLO logical channel (MLCs) close to the beginning of Frame 1. For instance, *T*_{*TDM*1} can be set to be zero, such that if TDM Pilot 1 is not detected at the expected time, the sought FLO signal is declared unavailable and the receiver can immediately switch back to the original channel. To accommodate the residual timing offset of different RF channels *(e.g.,* on the order of approximately one hundred microseconds), *T*_{*TDM*1} can also be chosen to be one OFDM symbol duration.

The RF circuit may be switched approximately *T_{Settle}* + *T_{DCAcq}* + *T_{AGCAcq}* + *T_{ICAcq}* before the next expected TDM Pilot 1, where *Tₛₑₜₜₗₑ* is the RF settling time, *T_{DCAcq}* is one OFDM symbol duration for DC acquisition, and *T_{AGCAcq}* is one OFDM symbol duration for AGC acquisition. For the original channel, any MLC scheduled during the time when the receiver operates on the new RF channel will not be received (the "black-out" time for the original channel). This will have an impact only on the MLCs close to the end of Frame 4. The minimum length of the "black-out" period is given by the sum of the RF switching/settling time and two OFDM symbol durations (*e.g.*, for DC and AGC acquisition) plus the IC acquisition duration. IC acquisition time can be programmable and can be based in part on IC register settings. For a nominal period of 5 ms of the RF switching and settling time and a nominal IC acquisition duration of 5 OFDM symbols, the minimum "black-out" period is approximately 13 OFDM symbol durations. For benign channel conditions, based on the packets received from Frames 1, 2, and 3, the impacted code blocks can still be correctly decoded by implementation of, for instance, a Reed-Solomon outer code. Therefore, under non-extreme channel conditions and code blocks scheduled close to the end of frames, receiver performance will not be detrimentally affected. The effect of the "black-out" period of approximately 13 symbols also depends on the number of PPC (Positioning Pilot Channel) symbols located at the end of the superframe. For non-zero number of PPC symbols, such as 6, 10, 14, any negative impact associated with the "black-out" period at the end of Frame 4 may be further reduced.

Background monitoring may be initiated by the application layer. On the other hand, its initiation can be reception-quality dependent. For instance, the receiver can start background monitoring of new RF channels when the reception on the original channel is of low quality (*e.g.*, below a predetermined threshold level, ...). The reception quality can be determined to be low if the RSSI is below a certain threshold, if the packet erasure rate is higher than a certain threshold, etc. Periodically, a list of the RF channels with FLO services determined by the background monitoring may be fed back to the software, which can then initiate a handoff to one of the new channels. To save receiver power consumption, during the RF circuit switching and settling time the digital baseband blocks following the sigma delta A/D can be turned off. The rate at which the receiver monitors a new RF channel can be variable. The maximum rate can be such that one new channel is monitored every superframe in Frame 4. To further conserve receiver power consumption, the background monitoring can also happen once every few superframes. The monitoring of new channels can also be initiated when the FLO receiver is in idle mode (not decoding any FLO signal), which is similar to the loss of lock-based or the application layer-initiated monitoring. As such, the considerations made for those scenarios are applicable.

**Fig. 6** illustrates a timeline 600 for performing background monitoring with a WID energy-based FLO signal detection method, according to one or more aspects. For instance, timeline 600 can be viewed in conjunction with methodology 300, described above, wherein only a WID energy criteria is employed. During a "store registers" time period block 602, registers associated with an original RF channel may be stored. After RF channel switching and settling (*e.g.*, approximately 5 ms), a DC acquisition block 604 is illustrated, during which a DC component associated with a new RF channel may be removed. DC acquisition block 604 is followed by an AGC acquisition block 606, during which gain control information can be evaluated. An IC (interference canceller) acquisition block 608 follows the AGC acquisition block 606. IC acquisition may be performed, upon the completion of which an IC_Done interrupt may be provided. A TDM1 block 610 defines a period T_{TDM1} during which detection of a first pilot, TDM Pilot 1, may be attempted. During this period, a determination may be made regarding whether RSSI for the particular RF channel is less than a predetermined threshold. If so, then a conclusion can be made that a FLO signal is not present in the RF channel. TDM1 block 610 is followed in time by a WIC block 612, during which a conclusion may be drawn that a FLO signal is not present in the RF channel if no pilot has been detected during the T_{TDM1}. During an LIC block 614, an evaluation of the WID energy detected during block 612 may be performed. If WID energy is determined to be greater than or equal to a predetermined threshold, then a FLO signal has been successfully detected. If not, then an assumption can be made that no FLO signal was detected in the current RF channel. After another RF switching and settling period, registers may be restored and operation may be resumed, at block 616. Resuming operation may comprise, for instance, resuming communication over an RF channel in which a FLO signal has been detected, performing another iteration of FLO signal detection in the event that a FLO signal has not been detected, or the like.

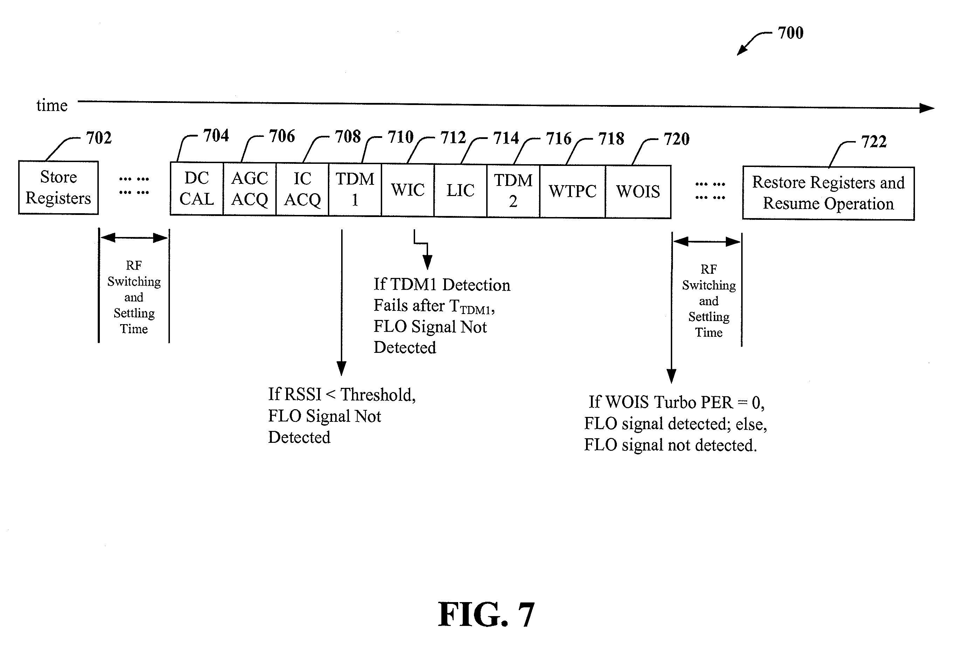

**Fig. 7** illustrates a timeline 700 for performing background monitoring with a WOIS-PER-based FLO signal detection method, according to one or more aspects. For instance, timeline 700 can be viewed in conjunction with methodology 300, described above, wherein only a WOIS packet error rate criteria is employed. A "store registers" time period block 702 is depicted, wherein registers associated with an original RF channel may be stored. After a period during which RF channel switching and settling occurs (*e.g.*, approximately 5 ms), a DC acquisition block 704 is illustrated, during which a DC component associated with a new RF channel may be removed. DC acquisition block 704 may be followed by an AGC acquisition block 706, during which gain control information can be assessed and/or evaluated. An IC (interference canceller) acquisition block 708 follows the AGC acquisition block 706. A TDM1 block 710 corresponds to a period T_{TD1i}, during which detection of a pilot, TDM Pilot 1, may be attempted. During this period, a determination may be made regarding whether an RSSI for the particular RF channel is below a predetermined threshold. If so, then a FLO signal is deemed not to be present in the current RF channel. TDM1 block 710 is followed by a WIC block 712, during which a conclusion may be drawn that a FLO signal is not present in the RF channel, in the event that no pilot has been detected during the T_{TDM1}.

WIC block 712 can be followed by a LIC block 714, a TDM2 block 716, a WTPC block 718, and a WOIS block 720, in a manner similar to that described above with regard to Fig. 4. Upon termination of the WOIS block, a determination can be made regarding whether WOIS Turbo PER is equal to zero, in which case a FLO signal has been detected. If the WOIS PER is not equal to zero, then no FLO signal has been detected. After another RF switching and settling period, registers may be restored and another operation may be resumed, at block 722. Resuming operation may comprise, for instance, resuming communication over an RF channel in which a FLO signal has been detected, performing another iteration of FLO signal detection in the event that a FLO signal has not been detected, or the like.

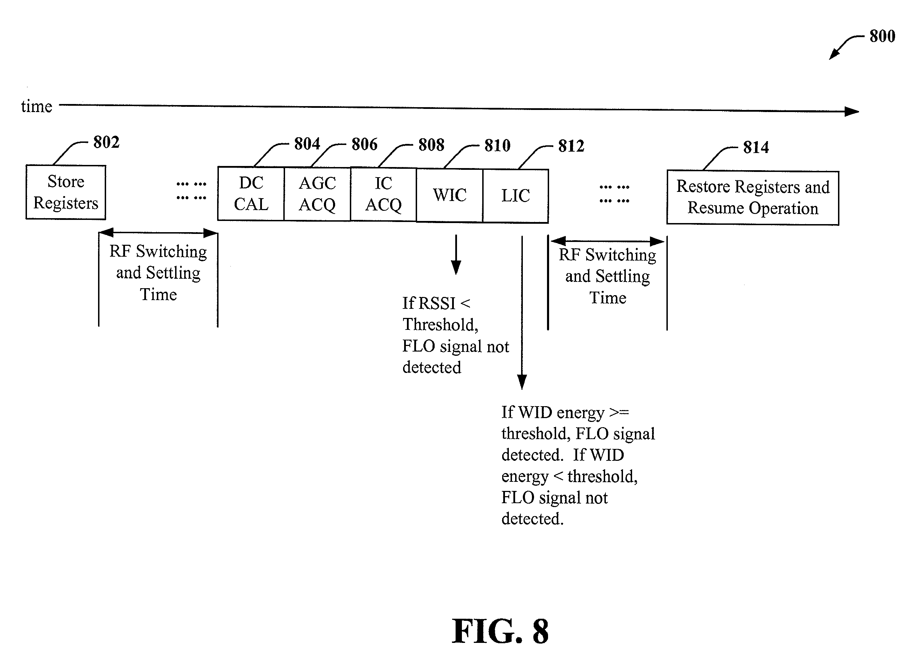

**Fig. 8** illustrates a timeline 800 for performing background monitoring with a WID energy-based FLO signal detection method, according to one or more aspects. For instance, timeline 800 can be viewed in conjunction with methodology 300, described above, wherein WID energy criteria is employed with TDM1 processing. During a "store registers" time period block 802, registers associated with an original RF channel may be stored. After RF channel switching and settling (*e.g.*, approximately 5 ms), a DC acquisition block 804 is illustrated, during which a DC component associated with a new RF channel may be removed. DC acquisition block 804 is followed by an AGC acquisition block 806, during which gain control information can be evaluated. An IC acquisition block 808 follows the AGC acquisition block, which is followed in time by a WIC block 810, during which a conclusion may be drawn that a FLO signal is not present in the RF channel. During an LIC block 812, an evaluation of the WID energy detected during block 810 may be performed. If WID energy is determined to be greater than or equal to a predetermined threshold, then a FLO signal has been successfully detected. If not, then an assumption can be made that no FLO signal was detected in the current RF channel. After another RF switching and settling period, registers may be restored and operation may be resumed, at block 814. Resuming operation may comprise, for instance, resuming communication over an RF channel in which a FLO signal has been detected, performing another iteration of FLO signal detection in the event that a FLO signal has not been detected, or the like.

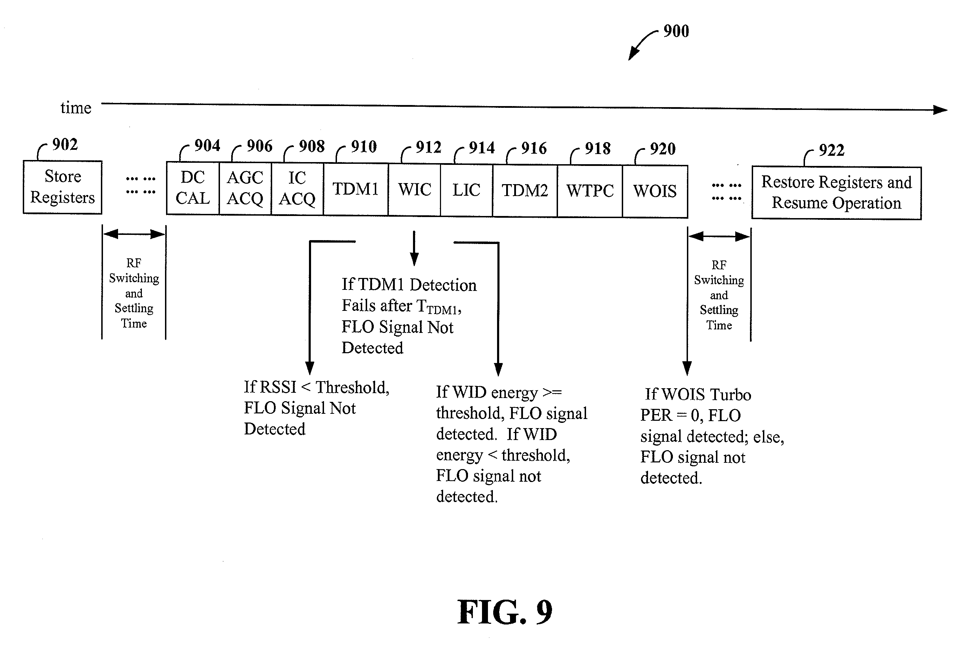

**Fig. 9** is an illustration of a timeline 900 for performing background monitoring with a combined WID-energy-and- WOIS-PER-based FLO signal detection method, according to one or more aspects. For instance, timeline 900 can be viewed in conjunction with methodology 300, described above. A "store registers" time period block 902 is depicted, during which registers associated with an original RF channel may be stored. After a period during which RF channel switching and settling occurs (*e.g.*, approximately 5 ms), a DC acquisition block 904 is illustrated, during which a DC component associated with a new RF channel may be removed. DC acquisition block 904 is followed by an AGC acquisition block 906, during which gain control information can be retrieved and/or evaluated. The AGC acquisition block 906 is followed by an IC acquisition block 908 which is further followed by a TDM1 block 910. The TDM1 block 910 corresponding to a period T_{TDM1} during which detection of a pilot, TDM Pilot 1, may be attempted follows AGC acquisition block. During period T_{TDM1}, an RSSI for the particular RF channel may be evaluated to assess whether it is below a predetermined threshold. If so, then a FLO signal is deemed not to be present in the current RF channel. TDM1 block 910 is followed by a WIC block 912, during which a conclusion may be drawn that a FLO signal is not present in the RF channel, in the event that no pilot has been detected during the T_{TDM1}.

WIC block 912 can be followed by a LIC block 914, during which WID energy detected during WIC block 912 can be assessed to determine whether it is greater than or equal to a predetermined threshold value. If the determination indicates that WID energy is at or above the predetermined threshold value, then a FLO signal has been detected. If the detected WID energy level is below the predetermined threshold, then no FLO signal has been detected in the current RF channel. LIC block is followed by a TDM2 block 916, a WTPC block 918 that facilitates estimating a channel for WOIS decoding, and a WOIS block 920, in a manner similar to that described above with regard to Fig. 4. Upon termination of WOIS block 920, a determination can be made regarding whether WOIS Turbo PER is equal to zero, in which case a FLO signal has been detected. If the WOIS PER is not equal to zero, then no FLO signal has been detected. After another RF switching and settling period, registers may be restored and operation may be resumed, at block 922. It will be appreciated that resuming operation may comprise, for instance, resuming communication over an RF channel in which a FLO signal has been detected, performing another iteration of FLO signal detection in the event that a FLO signal has not been detected, or any other suitable operation.

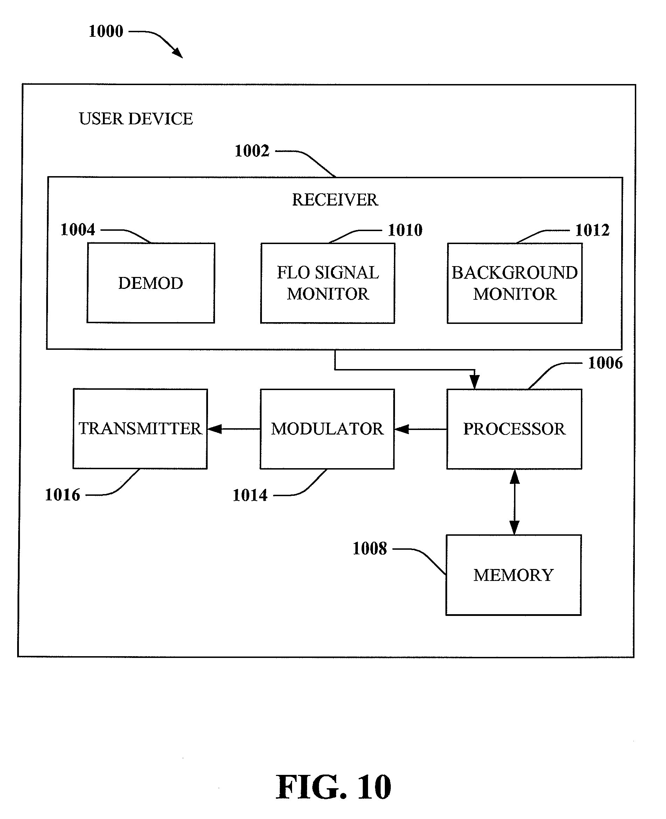

**Fig. 10** is an illustration of a user device 1000 that facilitates FLO channel monitoring and/or switching over a FLO channel in a wireless communication environment, in accordance with one or more aspects set forth herein. User device 1000 comprises a receiver 1002 that receives a signal from, for instance, a receive antenna (not shown), and performs typical actions thereon (*e.g.*, filters, amplifies, downconverts, *etc*.) the received signal and digitizes the conditioned signal to obtain samples. A demodulator 1004 can demodulate and provide received pilot symbols to a processor 1006 for channel estimation. Processor 1006 can be a processor dedicated to analyzing information received by receiver 1002 and/or generating information for transmission by a transmitter 1016, a processor that controls one or more components of user device 1000, and/or a processor that both analyzes information received by receiver 1002, generates information for transmission by transmitter 1016, and controls one or more components of user device 1000.

User device 1000 can additionally comprise memory 1008 that is operatively coupled to processor 1006 and that stores information related to RF channel identity, TDM pilot information associated therewith, TDM pilot counter adjustments, lookup table(s) comprising information related thereto, and any other suitable information for supporting monitoring and/or switching RF channels to provide seamless information display to a user in a wireless communication system as described herein. Memory 1008 can additionally store protocols RF channel monitoring, RF channel switching, etc., such that user device 1000 can employ stored protocols and/or algorithms to perform the various methods described herein.

It will be appreciated that the data store (*e.g.*, memories) components described herein can be either volatile memory or nonvolatile memory, or can include both volatile and nonvolatile memory. By way of illustration, and not limitation, nonvolatile memory can include read only memory (ROM), programmable ROM (PROM), electrically programmable ROM (EPROM), electrically erasable ROM (EEPROM), or flash memory. Volatile memory can include random access memory (RAM), which acts as external cache memory. By way of illustration and not limitation, RAM is available in many forms such as synchronous RAM (SRAM), dynamic RAM (DRAM), synchronous DRAM (SDRAM), double data rate SDRAM (DDR SDRAM), enhanced SDRAM (ESDRAM), Synchlink DRAM (SLDRAM), and direct Rambus RAM (DRRAM). The memory 1008 of the subject systems and methods is intended to comprise, without being limited to, these and any other suitable types of memory.

Receiver 1002 can further comprise a FLO channel monitor 1010 that facilitates initiating monitoring of new FLO RF channels upon, for instance, a loss-of-lock occurrence, as described above. Additionally and/or alternatively, FLO channel monitor 1010 can perform application-initiated FLO channel monitoring. Receiver 1002 can still further comprise a background monitor 1012 that performs various actions related to background monitoring of one or more RF channels. For example, background monitor 1012 can enforce several constraints related to the DC, AGC, AFC, and timing blocks, in order to restore the receiver operation on the original channel when an RF frequency is switched back.

For example, with regard to a DC block, before switching to a new RF channel, coarse and fine loop accumulators (and/or other registers) associated with a current RF channel may be stored in memory 1008. Such loop accumulators may be recovered after switching back to the original channel. Regarding an AGC block, AGC gain state and DVGA loop accumulator value for a current channel may be stored before switching and recovered upon switching back. For an AFC block, an outer loop frequency accumulator may be frozen (*e.g.*, stored) after switching to a new channel and before switching back to an original channel. Because the RF is switched only temporarily to search for FLO signal, the outer loop update may be associated with a temperature-compensated voltage control crystal oscillator (TCVCXO) when operating on the new channel and the inner loop may be employed to track, for instance, residual frequency error and Doppler for the new channel. The frequency accumulator of the inner loop may be stored to memory 1008 before switching to the new channel and may be recovered after switching back to the original channel, upon which the outer loop may be updated again to facilitate resuming operation on the original channel. For the timing block, and in view of the fact that the above-described FLO searching methods detect the TDM Pilot 1 on the new channel, the TDM Pilot 1 counter adjustment may be stored to memory 1008 after TDM Pilot 1 is detected on the new channel, and may be undone before the channel is switched back to the original frequency. Whether using the WOIS PER method or the combined WID/WOIS method for FLO signal searching, the TDM Pilot 2 for new channel is always processed so that a TDM Pilot 2 counter adjustment for the new channel may also be stored and undone before switching back to an original channel. In this manner, receiver 1002 can perform a plurality of RF channel monitoring functions in conjunction with FLO signal searching and/or switching to facilitate improved user experience and seamless reception of streaming data or the like.

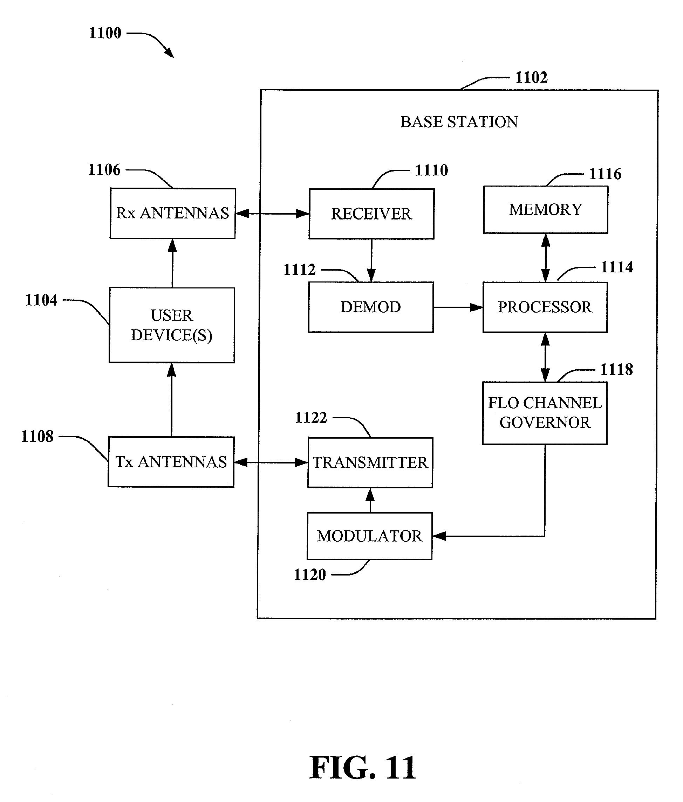

**Fig. 11** is an illustration of a system 1100 that facilitates providing multiple RF channels in a wireless communication environment in accordance with various aspects. System 1100 comprises a base station 1102 with a receiver 1110 that receives signal(s) from one or more user devices 1104 through a plurality of receive antennas 1106, and a transmitter 1122 that transmits to the one or more user devices 1104 through a transmit antenna 1108. Receiver 1110 can receive information from receive antennas 1106 and is operatively associated with a demodulator 1112 that demodulates received information. Demodulated symbols are analyzed by a processor 1114 that is similar to the processor described above with regard to Fig. 10, and which is coupled to a memory 1116 that stores information related to user identities, RF channel frequencies, data transmitted over RF channels, lookup tables related thereto, and/or any other suitable information related to performing the various actions and functions set forth herein. Processor 1114 is further coupled to a FLO channel governor 1118 that synchronizes superframe transmissions on multiple RF channels, which can facilitate RF channel switching by user device(s) 1104 as described with regard to preceding figures. A modulator 1120 can multiplex a signal for transmission by transmitter 1122 through transmit antenna 1108 to user device(s) 1104. In this manner, base station 1102 can interact with user device(s) 1104 to permit RF channel switching, FLO signal detection, channel monitoring, etc.

According to various other aspects described herein, FLO signals on different RF channels may be superframe-synchronized to facilitate switching between and/or monitoring of RF channels. FLO signals on different RF channels may also be designed to have the same or similar bandwidths to mitigate complication associated with switching between different clock rates. Additionally, a "wide area" may be generalized to the union of coverage areas broadcasting the same wide multiplexes, which may occur on the same or different RF channels. Moreover, the various methods and systems described herein can provide air interface support by, for instance, maintaining a list of RF channels utilized in a neighboring region or area, such as neighboring RF channels within a same wide-area overhead information (WOI) region as well as RF channels in adjacent WOI areas. Within a wide area, control channel information may be similar or identical for different nodes to facilitate seamless handoff of a user device. Typically, a seamless handoff can occur when a neighbor channel carries the same WID/LID as the current RF such that the contents being broadcast on both channels are the same and there is no superframe loss. Otherwise, if the WID/LID of the neighbor RF is different than the current, the handoff is non-seamless. In this manner, the systems and methods described herein can facilitate specifying timelines for RF channel switching, software and/or hardware monitoring operations, operating conditions under which different methods/routines/subroutines are called, *etc.*

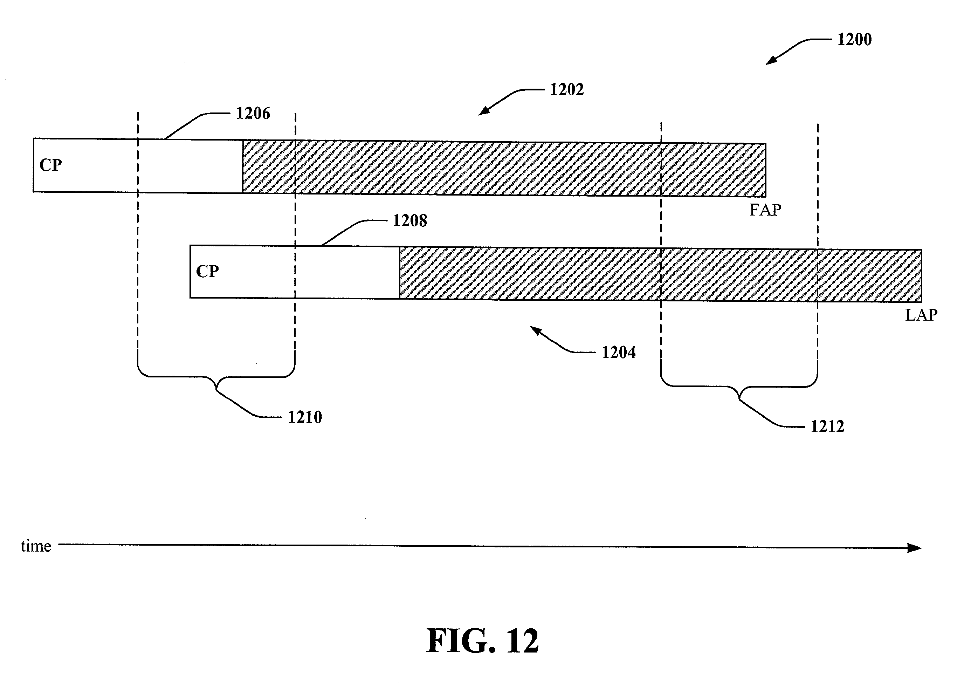

**Fig. 12** is an illustration of a CP correlation arrangement 1200, in accordance with one or more aspects. For example, a first arrived path (FAP) 1202 and a last arrived path (LAP) 1204 may be offset in time and may each comprise a CP portion 1206 and 1208, respectively. A CP correlation window 1210 may be positioned to begin at an average of the starting points of the FAP 1202 and the LAP 1204 (*e.g.*, (FAP+LAP)/2), and may have a predetermined length (*e.g.*, 256 samples, 512 samples, 1024 samples, etc.) According to other aspects, a predetermined offset may be applied to the starting point of the CP correlation window. A window 1212 can be separated from the first CP correlation window 1210 by a FFT size and CP correlation can be performed between samples in window 1210 and 1212.

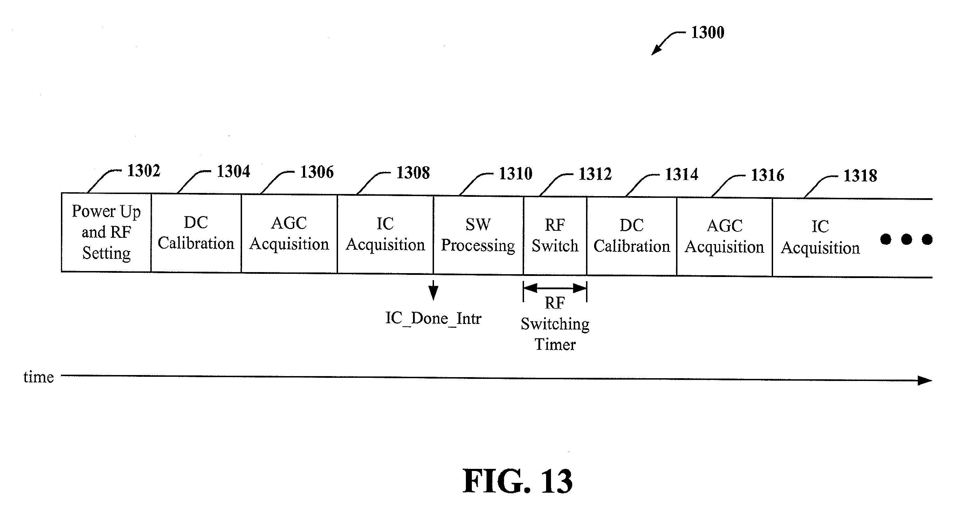

**Fig. 13** is an illustration of a timeline 1300 for an RSSI power-up protocol, in accordance with one or more aspects. AT 1302, power-up may be initiated and radio frequency (RF) settling may be permitted to occur. DC calibration may be performed at 1304, followed by AGC acquisition at 1306. At block 1308, interference canceller (IC) acquisition may be performed, upon the completion of which an IC_Done interrupt may be provided. Software processing may occur at 1310, after the IC_Done interrupt. Upon completion of the software processing at 1310, an RF switching timer may be initiated, and an RF switching may be performed at 1312. DC calibration may be again performed at 1314, followed by AGC acquisition at 1316 and IC acquisition at 1318, *etc*., for further iterations of the protocol on subsequent frequencies.

Upon the occurrence of the IC_Done interrupt (*e.g.*, during the software processing period 1310), software may read the AGC gain state, as well as primary and secondary digital variable gain amplifier (DVGA) accumulators to calculate RSSI. The protocol selection bits (*e.g.*, to select the RSSI protocol, or an RSSI-with-CP correlation protocol, described below) may be set for a subsequent RF. AGC AFC registers may then be programmed. A set of IC control bits can then be set such that these bits determine the behavior of IC. After switching to the new RF, a decision can made regarding resetting of buffers, carrying out acquisition, and/or reloading of previously backed up IC coefficients depending on the value of the IC control bits.

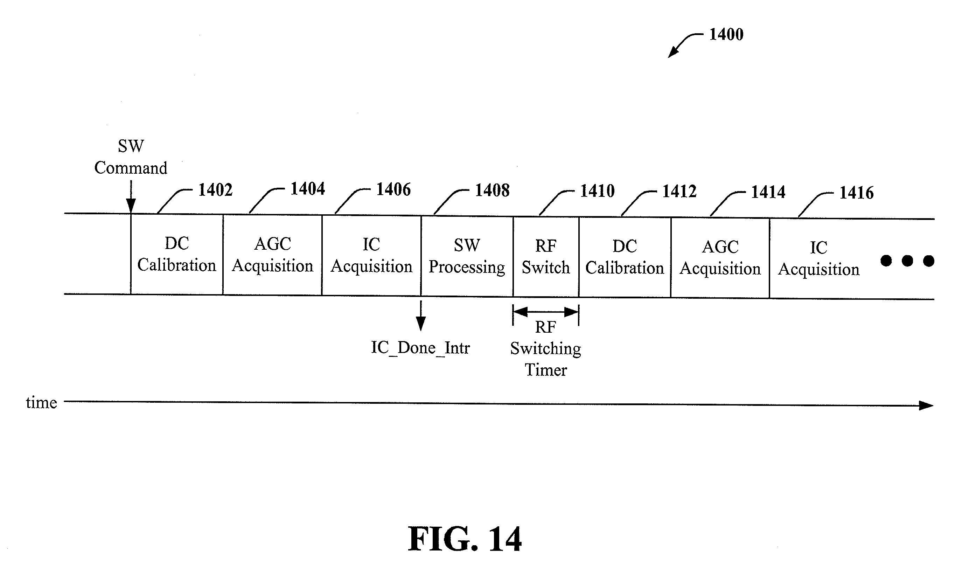

**Fig. 14** illustrates a timeline 1400 for performing an asynchronous RSSI protocol during an idle mode/application-layer-initiated period, in accordance with various aspects. Upon a software command, DC calibration may be performed, at 1402. AGC acquisition and IC acquisition may be performed at 1404 and 1406, respectively. An IC_Done interrupt may be provided after IC acquisition, upon which the various operations described above with regard to Fig. 13 may be performed. Software processing may be carried out at 1408, and there after an RF switching timer may be initiated and an RF switch may be made at 1410. DC calibration may follow at 1412, along with AGC acquisition at 1414 and IC acquisition at 1416, *etc*., for further iteration on the new RF.

Regarding software and hardware interaction during RF switching, software may program an RF using information stored in the SSBI memory. A software protocol may then initiate a software RF switching timer, turn off the LNA, and enable DC calibration. According to a related aspect, software may program a new RF using information stored in the SSBI and then trigger a hardware RF switching timer (*e.g.*, in the AFC), upon the expiration of which the hardware may turn off the LNA and initiate DC calibration. Yet another aspect relates to software programming of the SSBI data memory with values for a new RF. Hardware (*e.g.*, the SSBI) may then program the new RF, wait for the hardware RF switching timer to time out, and then turn of the LNA and enable DC calibration.

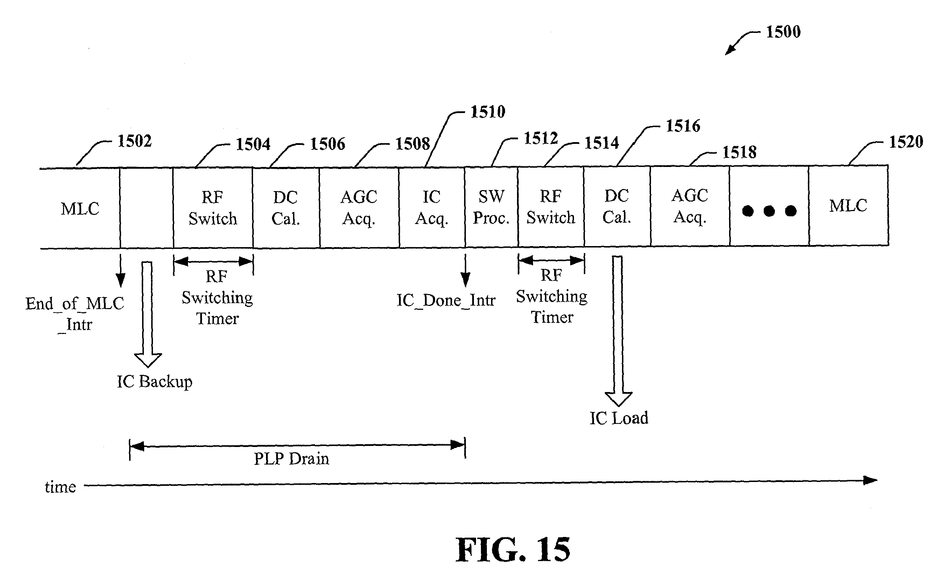

**Fig. 15** illustrates an RSSI monitoring timeline 1500 that facilitates providing an end-of-MLC interrupt upon the termination of a MediaFLO logical channel, in accordance with one or more aspects. During the RSSI monitoring, the RSSIs of neighboring RFs are monitored in background during a MLC gap of the current RF, on which MLCs are being decoded. According to the timeline 1500, an MLC may occur at 1502, and an end-of-MLC interrupt may be provided upon conclusion of the MLC. Upon the end-of-MLC interrupt, backup of IC coefficients may be performed, and a bit associated with one or more of an RSSI protocol and an RSSI-with-CP correlation protocol may be set to 1. During the RSSI protocol the device only monitors the RSSI of a neighbor channel when it switches to the neighbor channel. For RSSI+CP correlation protocol, the device monitors both RSSI and CP correlation on the neighbor channel. AGC AFC registers may then be programmed and an IC acquisition bit may be set to 1, as described above. Software programming of a new RF may be initiated and a hardware RF switching timer may be triggered.

A switch to a new RF may be performed at 1504, followed by DC calibration at 1506 and AGC acquisition at 1508. IC acquisition may be performed at 1510, and an IC_Done interrupt may be provided at the end of IC acquisition. Upon the IC_Done interrupt, software may read the AGC gain state and primary and secondary DVGA accumulators to calculate RSSI. A bit associated with an RSSI and/or an RSSI+CP correlation protocol may be set to 1 to select the RSSI-only protocol (*e.g.*, as opposed to the RSSI_CP correlation protocol, although bit assignments may be reversed if desired). AGC AFC registers, may be programmed, and an IC acquisition bit may be set to 0 (*e.g.*, to indicate a lack of IC acquisition and IC_Done_Intr on the MLC RF). On a subsequent DC_Cal_Done signal, hardware may partially reset the IC (buffer, shift register), load IC coefficients if switching to MLC RF, and start the IC in tracking mode after AGC acquisition. Software may then program new RF through SSBI, and trigger RF switching timer in hardware. The new RF can be the MLC RF on which the MLCs are being decoded, or can be one of the neighboring RFs, in which case the device may continue to monitor other RFs before switching back to MLC RF, provided MLC gap is sufficient. Logic associated with the IC-Done interrupt may be counter based, and a duration of the IC acquisition period may be programmable.

At 1512, software processing may be performed (*e.g.*, which may include the foregoing actions described as occurring upon the IC_Done interrupt) and the hardware RF switching timer may be triggered as described above to permit a switch to a new RF to be made at 1514. DC calibration may occur at 1516, followed by AGC acquisition at 1518, and so on for further iterations until a subsequent MLC at 1520.

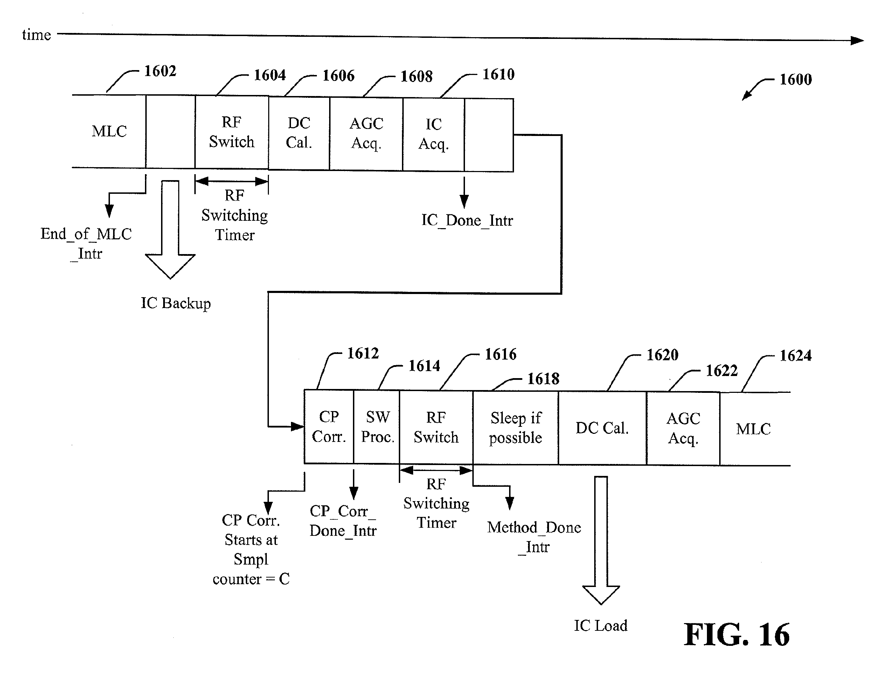

**Fig. 16** is an illustration of a timeline 1600 for an RSSI-with-CP correlation protocol, in accordance with one or more aspects. The protocol facilitates monitoring multiple RFs in a single MLC gap. An MLC 1602 may terminate at 1602, upon which an end-of-MLC interrupt ay be triggered. IC coefficients may be backed up, followed by RF switching at 1604. DC calibration may be performed at 1606, followed by AGC acquisition at 1608. IC acquisition can be performed at 1610. CP correlation may be initiated and performed at 1612, and a CP_correlation_Done interrupt may be provided, upon which software processing may be performed at 1614. A switch to a new RF may occur at 1616, followed by a sleep period (*e.g.*, a power-down period) 1618, if possible. DC calibration may then be performed at 1620, which may be followed by an AGC calibration period 1622, which in turn may be followed by a subsequent MLC 1624.

Upon the end-of-MLC interrupt after block 1602, , backup of IC coefficients may be performed, and a bit associated with an RSSI protocol and an RSSI-with-CP correlation protocol may be set to 0 (*e.g.*, to select the RSSI-with-CP correlation protocol for a next RF). AGC AFC registers may then be programmed and an IC acquisition bit may be set to 1, as described above. Software programming of a new RF may be initiated and a hardware RF switching timer may be triggered. According to various aspects, the IC_Done interrupt procedure need not comprise any processing. CP correlation may comprise initializing a sample counter to C, where C is equal to the average of the first arriving path (FAP) and the last arriving path (LAP) plus a known offset, which may be programmable. The CP_Corr_Done interrupt can facilitate reading an AGC gain state, as well as primary and secondary DVGA accumulators, reading a CP correlation buffer for software post-processing, setting an IC acquisition bit to 0, *etc.* When the hardware timer that counts the switching to a new MLC RF expires, a timer_done interrupt may be triggered to cause the software to look at the counter and sleep if possible. The device may switch back to the MLC RF to continue decoding, or may switch to another neighbor RF to monitor RSSI and CP correlation, provided the MLC gap is sufficient. If the device switches back to the MLC RF, then upon the timer_done interrupt the software may look at the OFDM symbol and sample counter and trigger sleep if possible.

According to other aspects, hardware can be configured to include IC backup and/or reload logic, CP correlation logic, a CP correlation counter, CP correlation calculation logic, logic for providing a CP correlation_done interrupt, a buffer for holding a CP correlation accumulation result, etc. Software may be designed to facilitate performing a CP correlation_done interrupt protocol, providing an RSSI-with-CP correlation method_done interrupt, performing RSSI protocols, performing CP correlation calculation and/or averaging, etc.

According to an example, if an MLC gap exceeds predefined threshold parameters, the RSSI+CP correlation protocol may be selected. For instance, if the MLC gap is greater than approximately 40 symbols long for 6 MHz, approximately 45 symbols long for 8 MHz, *etc*., then the RSSI+CP correlation protocol may be optimal. According to a related example, if the MLC gap is sufficiently long (*e.g*., greater than approximately 70 symbols, then the RSSI+CP correlation protocol. may be selected and a sleep period 1618 may be implemented. If the gap is insufficient for the RSSI+CP correlation protocol but sufficiently long (*e.g.*, greater than approximately 30 symbols in duration)for the RSSI-only protocol, then the RSSI-only protocol may be selected. Additionally, overhead information symbol (OIS) processing may be given priority over the RSSI protocols. Moreover, software may decide to handoff to a new RF at any time during a given superframe. In the event that there is an insufficient gap duration (*e.g.*, less than approximately 30 symbols, *etc*.) for the RSSI-only protocol, then RF monitoring may be suspended and, upon detection of an OIS failure the asynchronous RSSI-only protocol may be triggered. It will be appreciated that the gap durations described above are presented for illustrative purposes only and that other gap durations may be defined and/or employed in conjunction with the various aspects described herein.

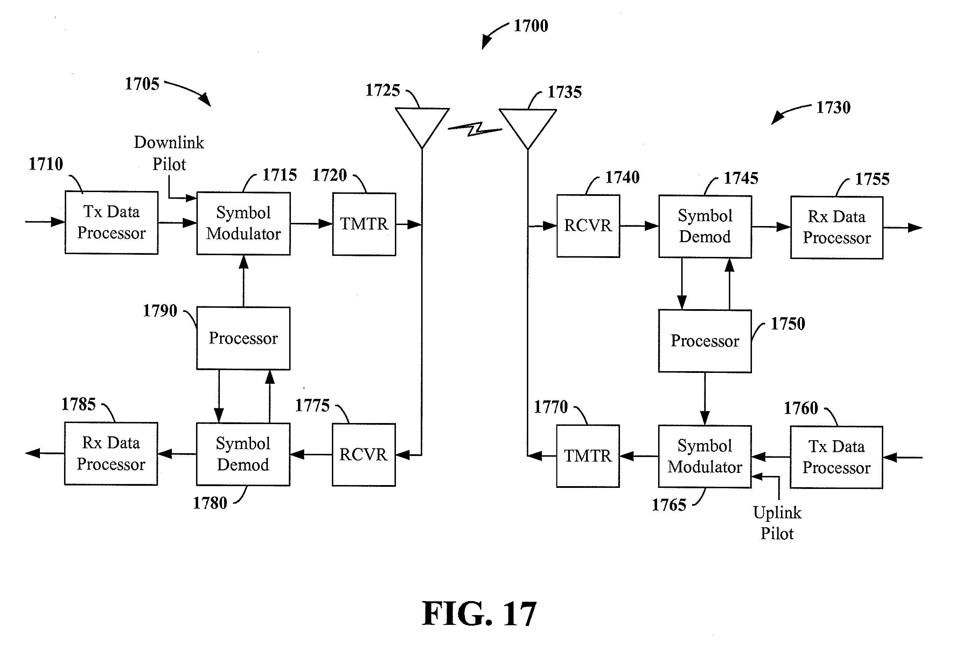

**Fig. 17** shows an exemplary wireless communication system 1700. The wireless communication system 1700 depicts one base station and one terminal for sake of brevity. However, it is to be appreciated that the system can include more than one base station and/or more than one terminal, wherein additional base stations and/or terminals can be substantially similar or different for the exemplary base station and terminal described below. In addition, it is to be appreciated that the base station and/or the terminal can employ the systems **(****Figs. 1****,** **2****, and** **4****-18)** and/or methods **(****Figs. 3****)** described herein to facilitate wireless communication there between.

Referring now to **Fig. 17**, on a downlink, at access point 1705, a transmit (TX) data processor 1710 receives, formats, codes, interleaves, and modulates (or symbol maps) traffic data and provides modulation symbols ("data symbols"). A symbol modulator 1715 receives and processes the data symbols and pilot symbols and provides a stream of symbols. A symbol modulator 1720 multiplexes data and pilot symbols and provides them to a transmitter unit (TMTR) 1720. Each transmit symbol may be a data symbol, a pilot symbol, or a signal value of zero. The pilot symbols may be sent continuously in each symbol period. The pilot symbols can be frequency division multiplexed (FDM), orthogonal frequency division multiplexed (OFDM), time division multiplexed (TDM), frequency division multiplexed (FDM), or code division multiplexed (CDM).

TMTR 1720 receives and converts the stream of symbols into one or more analog signals and further conditions (*e.g.*, amplifies, filters, and frequency upconverts) the analog signals to generate a downlink signal suitable for transmission over the wireless channel. The downlink signal is then transmitted through an antenna 1725 to the terminals. At terminal 1730, an antenna 1735 receives the downlink signal and provides a received signal to a receiver unit (RCVR) 1740. Receiver unit 1740 conditions (*e.g.*, filters, amplifies, and frequency downconverts) the received signal and digitizes the conditioned signal to obtain samples. A symbol demodulator 1745 demodulates and provides received pilot symbols to a processor 1750 for channel estimation. Symbol demodulator 1745 further receives a frequency response estimate for the downlink from processor 1750, performs data demodulation on the received data symbols to obtain data symbol estimates (which are estimates of the transmitted data symbols), and provides the data symbol estimates to an RX data processor 1755, which demodulates (i.e., symbol demaps), deinterleaves, and decodes the data symbol estimates to recover the transmitted traffic data. The processing by symbol demodulator 1745 and RX data processor 1755 is complementary to the processing by symbol modulator 1715 and TX data processor 1710, respectively, at access point 1705.

On the uplink, a TX data processor 1760 processes traffic data and provides data symbols. A symbol modulator 1765 receives and multiplexes the data symbols with pilot symbols, performs modulation, and provides a stream of symbols. A transmitter unit 1770 then receives and processes the stream of symbols to generate an uplink signal, which is transmitted by the antenna 1735 to the access point 1705.

At access point 1705, the uplink signal from terminal 1730 is received by the antenna 1725 and processed by a receiver unit 1775 to obtain samples. A symbol demodulator 1780 then processes the samples and provides received pilot symbols and data symbol estimates for the uplink. An RX data processor 1785 processes the data symbol estimates to recover the traffic data transmitted by terminal 1730. A processor 1790 performs channel estimation for each active terminal transmitting on the uplink. Multiple terminals may transmit pilot concurrently on the uplink on their respective assigned sets of pilot subbands, where the pilot subband sets may be interlaced.

Processors 1790 and 1750 direct (*e.g.*, control, coordinate, manage, etc.) operation at access point 1705 and terminal 1730, respectively. Respective processors 1790 and 1750 can be associated with memory units (not shown) that store program codes and data. Processors 1790 and 1750 can also perform computations to derive frequency and impulse response estimates for the uplink and downlink, respectively.

For a multiple-access system (*e.g.*, FDMA, OFDMA, CDMA, TDMA, etc.), multiple terminals can transmit concurrently on the uplink. For such a system, the pilot subbands may be shared among different terminals. The channel estimation techniques may be used in cases where the pilot subbands for each terminal span the entire operating band (possibly except for the band edges). Such a pilot subband structure would be desirable to obtain frequency diversity for each terminal. The techniques described herein may be implemented by various means. For example, these techniques may be implemented in hardware, software, or a combination thereof. For a hardware implementation, the processing units used for channel estimation may be implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units designed to perform the functions described herein, or a combination thereof. With software, implementation can be through modules (*e.g.*, procedures, functions, and so on) that perform the functions described herein. The software codes may be stored in memory unit and executed by the processors 1790 and 1750.

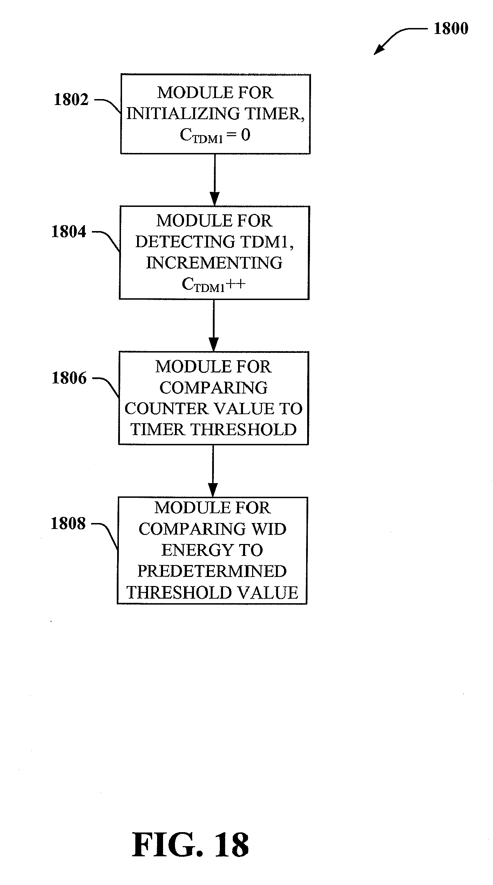

**Fig. 18** is an illustration of an apparatus 1800 that facilitates performing FLO signal detection in accordance with various aspects presented herein. In order to determine whether FLO service is available on an RF channel, FLO detection can be initiated and a module for initializing a timer 1802, such as a time-division multiplexed (TDM) pilot detection timer, can be activated to attempt to detect a first TDM pilot (TDM1), and a timer count there for, C_{TDM1}, can be initiated at 0. Module for initializing the timer 1802 can be operatively coupled to a module for detecting a pilot 1804 (*e.g.*, TDM1), which can also increment the counter C_{TDM1}. A module for comparing 1806 can compare a counter value associated with C_{TDM1} to a value associated with a pilot being sought to determine whether the counter value is greater than the value of the pilot being sought. For instance, if the pilot being sought is TDM1, and the counter has been incremented from 0 to 1 by module for detecting a pilot 1804, then module for comparing 1806 can determine that the counter value is not greater than the value of the pilot being sought (*e.g.*, in this example the values are equal). In such a case, module for detecting 1804 can initiate another attempt at pilot detection and increment the counter again. Additionally, module for detecting can make a determination regarding whether the pilot has successfully been detected.

A module for comparing wide-area identity (WID) energy can compare an energy level for a WID channel associated with the transmission being analyzed to a predetermined threshold energy level. If the detected WID energy is not greater than the predetermined threshold level, then the FLO signal is not detected. If the detected WID energy is greater than the threshold value, then the FLO signal has been detected. It will be understood that the various module of apparatus 1800 can be repeatedly and/or continuously executed and/or comprised by, for example, a user device communicating in a wireless communication environment to facilitate FLO signal detection.
Further features, aspects and embodiments of the invention are provided below in the following clauses:
Clause 1. A method of monitoring radio frequencies (RFs) at an access terminal in a wireless communication environment to detect a FLO (Forward link only) signal, comprising:
   detecting a first time-division-multiplexed pilot (TDM1) on a received signal;
   incrementing a TDM detection timer;
   determining if the TDM pilot has been detected and the TDM1 detection timer has exceeded a TDM detection timeout; and
   detecting a presence of the FLO signal based upon the determination.
Clause 2. The method of clause 1, further comprising detecting an energy level for a wide-area identifier (WID) associated with the received signal
Clause 3. The method of clause 2, further comprising determining the presence of the FLO signal based upon a comparison of the energy level with a predetermined threshold.
Clause 4. The method of clause 3, further comprising determining the occurrence of an error during decoding of a WOIS (wide-area overhead information symbol).
Clause 5. The method of clause 4, further comprising detecting a FLO signal if the error has not occurred.
Clause 6. The method of clause 1, further comprising determining the occurrence of an error during decoding of a WOIS (wide-area overhead information symbol).
Clause 7. The method of clause 6, further comprising detecting a FLO signal if the error has not occurred.
Clause 8. The method of clause 1, further comprising monitoring the radio frequencies on at least one of a loss of lock or initiation by an application layer.
Clause 9. The method of clause 1, further comprising monitoring the radio frequencies in the background without disturbing the decoding of the current RF channel.
Clause 10. The method of clause 9, disabling monitoring RF if a measured received signal strength indicator (RSSI) is above a predetermined threshold value.
Clause 11. The method of clause 9, further comprising enabling RF monitoring if a measured received signal strength indicator (RSSI) is less than or equal to a predetermined threshold value.
Clause 12. The method of clause 9, further comprising determining whether failure of one or more MediaFLO logical channel (MLC) segments has occurred.
Clause 13. The method of clause 9, further comprising executing an RF monitoring subroutine if an MLC failure has occurred.
Clause 14. The method of clause 12, further comprising initiating timeout logic upon an MLC failure.
Clause 15. The method of clause 14, further comprising enabling RF monitoring and obtaining OIS information for the one or more MLC segments.
Clause 16. The method of clause 15, further comprising initiating an RF monitoring subroutine.
Clause 17. The method of clause 1, further comprising performing an RSSI protocol along with CP correlation and monitoring neighboring RFs when a gap between MLCs is greater than a predetermined threshold.
Clause 18. The method of clause 1, further comprising performing an RSSI protocol without with CP correlation and monitoring neighboring RFs when a gap between MLCs is less than a predetermined threshold.
Clause 19. An apparatus that facilitates monitoring radio frequencies (RFs) at an access terminal in a wireless communication environment, comprising:
   a receiver that monitors at least one neighboring RF and analyzes an RSSI there for;
   a memory that stores information related to RSSI and identity information for a current RF and the at least one neighboring RF; and
   a processor, coupled to the memory, that switches between the current RF channel and the at least one neighboring RF channel.
Clause 20. The apparatus of clause 19, wherein the receiver determines whether the measured RSSI is above a predetermined threshold value.
Clause 21. The apparatus of clause 20, further comprising determining whether an overhead information symbol (OIS) failure has occurred, and initiating a reacquisition protocol if an OIS failure has occurred.
Clause 22. The apparatus of clause 21, wherein the receiver determines whether one or more MediaFLO logical channel (MLC) segments failure has occurred.
Clause 23. The apparatus of clause 22, wherein the receiver executes an RF monitoring subroutine if an MLC failure has occurred.
Clause 24. A wireless communication apparatus, comprising:
   means for measuring a received signal strength indicator (RSSI) for a current radio frequency (RF);
   means for determining whether the measured RSSI is above a predetermined threshold value;
   means for monitoring neighboring RFs; and
   means for detecting the presence of the FLO (forward link only) signal in the neighboring RFs.
Clause 25. The apparatus of clause 24, further comprising means for disabling RF monitoring if the measured RSSI is above the predetermined threshold value and enabling RF monitoring if the measured RSSI is less than or equal to the predetermined threshold value.
Clause 26. The apparatus of clause 24, further comprising means for monitoring the neighboring RFs employing at least one of a first time-division-multiplexed pilot (TDM1) detection, WID energy determination or WOIS packet error rate determination criteria.
Clause 27. The apparatus of clause 24, further comprising means for performing an RSSI protocol along with CP correlation and monitoring neighboring RFs when a gap between MLCs (MediaFLO logical channel) is greater than a predetermined threshold.
Clause 28. The apparatus of clause 24, further comprising means for performing an RSSI protocol without CP correlation and monitoring neighboring RFs when a gap between MLCs is less than a predetermined threshold.
Clause 29. The apparatus of clause 24, further comprising means for performing IC (interference cancellation) for robustness to narrow band interferences.
Clause 30. A computer-readable medium having a computer program comprising computer-executable instructions for:
   measuring a received signal strength indicator (RSSI) for a current radio frequency (RF);
   determining whether the measured RSSI is above a predetermined threshold value;
   monitoring neighboring RFs; and
   detecting the presence of the FLO (forward link only) signal in the neighboring RFs.
Clause 31. The computer-readable medium of clause 30, further comprising instructions for disabling RF monitoring if the measured RSSI is above the predetermined threshold value and enabling RF monitoring if the measured RSSI is less than or equal to the predetermined threshold value.
Clause 32. The computer-readable medium of clause 30, further comprising instructions for employing at least one of a first time-division-multiplexed pilot (TDM1) detection, WID energy determination or WOIS packet error rate determination criteria to monitor the neighboring RFs
Clause 33. The computer-readable medium of clause 30, further comprising means for performing an RSSI protocol along with CP correlation and monitoring neighboring RFs when gap between MLCs (MediaFLO logical channel) is greater than a predetermined threshold.
Clause 34. The computer-readable medium of clause 32, further comprising means for performing an RSSI protocol without CP correlation and monitoring neighboring RFs when gap between MLCs is less than a predetermined threshold.
Clause 35. The computer-readable medium of clause 32, further comprising means for performing IC (interference canceller) acquisition for robustness to narrow band interferences.
Clause 36. A processor that executes instructions for increasing throughput in a wireless communication environment, the instructions comprising:
   measuring a received signal strength indicator (RSSI) for a current radio frequency (RF);
   determining whether the measured RSSI is above a predetermined threshold value;
   monitoring neighboring RFs; and
   detecting the presence of the FLO (forward link only) signal in the neighboring RFs.
Clause 37. The processor of clause 36, the instructions further comprising disabling RF monitoring if the measured RSSI is above the predetermined threshold value and enabling RF monitoring if the measured RSSI is less than or equal to the predetermined threshold value.
Clause 38. The processor of clause 36, further comprising employing a at least one of a first time-division-multiplexed pilot (TDM1) detection, WID energy determination or WOIS packet error rate determination criteria to monitor the neighboring RFs
Clause 39. The processor of clause 38, further comprising performing an RSSI protocol along with CP correlation and monitoring neighboring RFs when gap between MLCs (MediaFLO logical channel) is greater than a predetermined threshold.
Clause 40. The processor of clause 38, further comprising performing an RSSI protocol without with CP correlation and monitoring neighboring RFs when gap between MLCs is less than a predetermined threshold.
Clause 41. The processor of clause 38, further comprising performing IC (interference canceller) acquisition for robustness to narrow band interferences.
Clause 42. A method of monitoring radio frequencies (RFs) at an access terminal in a wireless communication environment to detect a FLO (Forward link only) signal, comprising:
   detecting an energy level for a wide-area identity (WID) channel associated with a received signal;
   comparing the energy level for the WID channel with a predetermined threshold; and
   detecting a presence of the FLO signal based upon the comparison.
Clause 43. A method of monitoring radio frequencies (RFs) at an access terminal in a wireless communication environment to detect a FLO (Forward link only) signal, comprising:
   determining the occurrence of an error during decoding of a WOIS (wide-area overhead information symbol); and
   detecting a FLO signal if the error has not occurred.

What has been described above includes examples of one or more embodiments. It is, of course, not possible to describe every conceivable combination of components or methodologies for purposes of describing the aforementioned embodiments, but one of ordinary skill in the art may recognize that many further combinations and permutations of various embodiments are possible. Accordingly, the described embodiments are intended to embrace all such alterations, modifications and variations that fall within the spirit and scope of the appended claims. Furthermore, to the extent that the term "includes" is used in either the detailed description or the claims, such term is intended to be inclusive in a manner similar to the term "comprising" as "comprising" is interpreted when employed as a transitional word in a claim.

## Claims

1. A wireless communication method, comprising:
measuring a received signal strength indicator (RSSI) for a current radio frequency (RF);
determining whether the measured RSSI is above a predetermined threshold value;
monitoring neighboring RFs; and
detecting the presence of the FLO (forward link only) signal in the neighboring RFs without detecting a time-division multiplexed pliot (TDM1).

2. The method of claim 1, further comprising means for disabling RF monitoring if the measured RSSI is above the predetermined threshold value and enabling RF monitoring if the measured RSSI is less than or equal to the predetermined threshold value.

3. The method of claim 1, further comprising means for monitoring the neighboring RFs employing at least one of a first time-division-multiplexed pilot (TDM1) detection, WID energy determination or WOIS packet error rate determination criteria.

4. The method of claim 1, further comprising means for performing an RSSI protocol along with CP correlation and monitoring neighboring RFs when a gap between MLCs (MediaFLO logical channel) is greater than a predetermined threshold.

5. The method of claim 1, further comprising means for performing an RSSI protocol without CP correlation and monitoring neighboring RFs when a gap between MLCs is less than a predetermined threshold.

6. The method of claim 1, further comprising means for performing IC (interference cancellation) for robustness to narrow band interferences.

7. A wireless communication apparatus comprising means for carrying out the method of any of claims 1 to 6.

8. A computer-readable medium having a computer program comprising computer-executable instructions for carrying out the method of any of claims 1 to 6.

9. A method of monitoring radio frequencies (RFs) at an access terminal in a wireless communication environment to detect a FLO (Forward link only) signal without detecting a time-division multiplexed pliot (TDM1), comprising:
detecting an energy level for a wide-area identity (WID) channel associated with a received signal;
comparing the energy level for the WID channel with a predetermined threshold; and
detecting a presence of the FLO signal based upon the comparison.
